# EUROPÄISCHE PATENTSCHRIFT

(11) **EP 2 593 336 B1**
(45) Veröffentlichungstag und Bekanntmachung des Hinweises auf die Patenterteilung: **04.10.2017**
(21) Anmeldenummer: 11720090.7
(22) Anmeldetag: 16.05.2011
(51) Int. Cl.: B60R 21/013

(54) **VERFAHREN UND VORRICHTUNG ZUM SCHUTZ EINES FAHRZEUGINSASSEN BEI EINEM AUFPRALL**
METHOD AND DEVICE FOR PROTECTING PASSENGERS IN THE EVENT OF AN IMPACT
MÉTHODE ET APPAREIL POUR LA PROTECTION DES OCCUPANTS EN CAS DE CHOC

(30) Priorität: 12.07.2010 DE 102010031261
(43) Veröffentlichungstag der Anmeldung: 22.05.2013
(73) Patentinhaber: Robert Bosch GmbH, 70442 Stuttgart (DE)
(72) Erfinder: FREIENSTEIN, Heiko, 71263 Weil Der Stadt (DE); SCHRADER, Jens, 76530 Baden-Baden (DE)
(86) Internationale Anmeldenummer: PCT/EP2011/057836
(87) Internationale Veröffentlichungsnummer: WO 2012/007204

(56) Entgegenhaltungen:
- DE-A1-102005 059 997
- DE-U1-202007 010 364

## Beschreibung

### Stand der Technik

Die Erfindung betrifft ein Verfahren bzw. eine Vorrichtung zum Schutz eines Fahrzeuginsassen bei einem Aufprall nach der Gattung der unabhängigen Patentansprüche.

Aus Baumann et al.: PRE-SAFE PULSE, die Erweiterung des Insassenschutzes durch Nutzung der Vor-Unfall-Phase, technischer Kongress 2010 VDA ist es bekannt, durch einen Voranstoß oder Vorimpuls den zu schützenden Insassen schon vor dem eigentlichen Aufprall in die Richtung zu bewegen, in die er beim Hauptanstoß über das Rückhaltesystem ohnehin gestoßen wird. Dies soll die Verletzungsfolgen für den Fahrzeuginsassen mindern. Dir Dokumente DE 20 2007 010 364 U1 und DE 10 2005 059 997 A1 offenbaren Verfahren und Vorrichtungen zum Schutz eines Fahrzeuginsassen.

### Offenbarung der Erfindung

Das erfindungsgemäße Verfahren bzw. die erfindungsgemäße Vorrichtung zum Schutz eines Fahrzeuginsassen bei einem Aufprall nach der Gattung der unabhängigen Patentansprüche haben demgegenüber den Vorteil, dass nunmehr in einer ersten Phase, die beispielsweise eine frühe Pre-Crash-Phase ist, der Fahrzeuginsasse stabilisiert wird. In einer zweiten Phase erfolgt dann die Bewegung des Fahrzeuginsassen durch einen Vorimpuls, durch eine weitere Aktuatorik, und zwar in die Richtung, in der durch das Rückhaltesystem im Aufprall mithin die Aufprallrichtung ohnehin gestoßen wird. In der Crashphase, die auf diese zweite Phase dann folgt, prallt dann der Fahrzeuginsasse mit reduzierter Aufprallgeschwindigkeit gegen die erste Aktuatorik. Damit kann durch die erste Aktuatorik in der ersten Phase die Pose des Fahrzeuginsassen optimal für den Puls in der zweiten Phase vorgesehen werden. Außerdem liegt die zweite Aktuatorik direkt an dem Insassen an. D. h. es muss kein weiterer Weg überbrückt werden, was Nachteile hinsichtlich der Ausführung der zweiten Aktuatorik bedingen würde. Diese zweite Aktuatorik kann, wie aus den abhängigen Ansprüchen hervorgeht, irreversibel ausgeführt sein, da diese zweite Aktuatorik nur nach einer Crashunvermeidbarkeit gezündet wird. Insgesamt ermöglicht die erfindungsgemäße Vorrichtung bzw. das erfindungsgemäße Verfahren eine höhere Toleranz gegenüber Fehlauslösungen.

Die Crashphase, die auf die zweite Phase folgt, ist durch den Crash oder Aufprall an sich charakterisiert, d.h. der Aufprall läuft ab.

Die Erfindung ist insbesondere für den Seitenaufprallschutz geeignet, da dabei die Aktuatorik eine besonders wichtige Schutzfunktion hat.

Ein Aufprall oder auch Crash ist vorliegend eine Kollision mit einem Objekt, deren Folgen gefährlich für Fahrzeuginsassen sind.

Die Richtung, in die der Fahrzeuginsasse durch die zweite Aktuatorik bewegt wird, ist die Aufprallrichtung. D. h. wenn der Aufprall von links kommt, von der Fahrzeuglängsrichtung aus gesehen, ist die Aufprallrichtung nach rechts und somit wird auch der Fahrzeuginsasse nach rechts durch diesen Puls bewegt. Beim Aufprall selbst ist die Trägheit zu beachten, d. h. der Fahrzeuginsasse wird sich zunächst zu der Seite bewegen, auf die das Aufprallobjekt einwirkt. Ziel des erfindungsgemäßen Verfahrens bzw. erfindungsgemäßen Vorrichtung ist, in diesem Aufprall des Fahrzeuginsassen auf die dann dort vorgesehene Prallplatte oder erste Aktuatorik in seiner Schwere zu reduzieren. Dies wird durch den Puls erreicht, den Fahrzeuginsassen zunächst in die entgegengesetzte Richtung zu bewegen.

D. h. mit Bewegen wird erfindungsgemäß ein Kraftstoß, der durch die zweite Aktuatorik ausgeführt wird, gemeint, bewirkt durch einen Airbag oder eine sich entspannende Feder.

Mit der ersten Phase ist eine frühe Pre-Crash-Phase gemeint, in der eine Umfeldsensorik per Radar, Video, Ultraschall usw., eine hohe Aufprallwahrscheinlichkeit, insbesondere Seitenaufprallwahrscheinlichkeit detektiert. Diese Wahrscheinlichkeit kann dabei beispielsweise über 50% liegen. Die zweite Phase, die sich an diese frühe Pre-Crash-Phase anschließt, kann als späte Pre-Crash-Phase bezeichnet werden. Durch die erste Aktuatorik ist in der ersten Phase der Fahrzeuginsasse stabilisiert. Nun erhält er in der zweiten Phase den Puls oder die Vorbeschleunigung, wenn das Signal einen unvermeidbaren oder bereits beginnenden Crash anzeigt. Ein unvermeidbarer Aufprall kann durch die Analyse eines Pre-Crash-Signals herausgefunden werden, während der beginnende Crash durch einen Aufprallsensorvorrichtung wie eine Beschleunigungssensorik erfassbar ist.

Die beiden Schnittstellen können hard- und/oder softwaremäßig ausgeführt werden. Die Sensorik, insbesondere die Pre-Crash-Sensorik ist in der Fahrzeugfront oder anderswo an geeigneten Stellen im Fahrzeug angeordnet. Wird eine Aufprallsensorik für die Erzeugung des Signals verwendet, kann diese in einem Airbagsteuergerät oder außerhalb angeordnet sein.

Bei dem Pre-Crash-Signal und dem Signal kann es sich um Vordaten oder bereits ausgewertete Daten handeln.

Die Steuereinheit, üblicherweise ein Mikrocontroller, sitzt in einem Airbagsteuergerät, das eben in Abhängigkeit von der Auswertung des Pre-Crash-Signals und des anderen Signals die erste und/oder die zweite Aktuatorik ansteuert.

Eine weitere vorteilhafte Ausgestaltung ist ein System mit der Vorrichtung, die letztlich nur das elektronische System ist, in Kombination mit der ersten und der zweiten Aktuatorik.

Durch die in den abhängigen Ansprüchen aufgeführten Maßnahmen und Weiterbildungen sind vorteilhafte Verbesserungen des in den unabhängigen Patentansprüchen angegebenen Systems bzw. Vorrichtung bzw. Verfahrens möglich.

Besonders vorteilhaft ist, dass die erste Aktuatorik eine Seitenwange und die zweite Aktuatorik ein Airbag sind, wobei ein Schusskanal zum Durchlassen des sich expandierenden Gases aus einem Gasgenerator in den Airbag in der Seitenwange vorgesehen ist. Damit ist klar, dass mit der ersten Aktuatorik eine Seitenwange gemeint sein kann und mit der zweiten Aktuatorik zumindest eine Feder. Eine pyrotechnische Ausbildung ist wie gesagt ebenfalls möglich.

Es ist weiterhin von Vorteil, dass die erste Aktuatorik reversibel betrieben wird. Dies bedeutet, dass bei einer Fehlauslösung eine leichte Zurückführung in die Ausgangslage der ersten Aktuatorik möglich ist. Ein Beispiel für eine solche reversibel ausgebildete Aktuatorik ist eine elektromotorische pneumatische hydraulische ausgeführte Aktuatorik. Die zweite Aktuatorik kann dagegen im Wesentlichen irreversibel ausgebildet sein, d. h. als pyrotechnisch angetriebene Aktuatorik.

Die Stabilisierung des Fahrzeuginsassen kann im Wesentlichen durch einen seitlichen Halt erfolgen. Dieser seitliche Halt kann sich im Bereich der Oberschenkel, des Beckens bis hin zum unteren Brustbereich erstrecken.

Die Stabilisierung dauert an während der ersten, der zweiten und darüber hinaus. Die Stabilisierung ist zum einen wichtig für die optimale Applizierung des Impulses durch die zweite Aktuatorik auf den Fahrzeuginsassen, so dass der Schutz des Fahrzeuginsassen optimiert wird.

Weiterhin ist es vorteilhaft, dass die zweite Aktuatorik schneller als die erste Aktuatorik betrieben wird. Dies ist insbesondere bei einer Ausführung der zweiten Aktuatorik als pyrotechnisch betriebene Aktuatorik leicht möglich.

Ausführungsbeispiele sind in der Zeichnung dargestellt und werden in der nachfolgenden Beschreibung näher erläutert.

Es zeigen
Figur 1 ein Blockschaltbild des Gesamtsystems,
die Figuren 2 bis 4 drei Phasen des Fahrzeuginsassen bei einem Seitenaufprall,
Figur 5 ein erstes Ausführungsbeispiel für die erste und zweite Aktuatorik,
Figur 6 ein zweites Ausführungsbeispiel,
Figur 7 ein drittes Ausführungsbeispiel,
Figur 8 ein viertes Ausführungsbeispiel und
Figur 9 ein Flussdiagramm des erfindungsgemäßen Verfahrens.

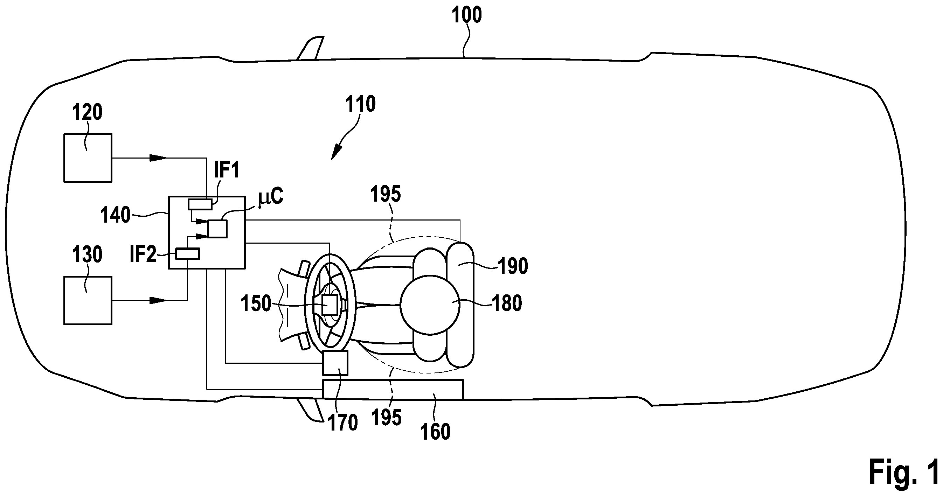

Figur 1 zeigt in einem Blockschaltbild die erfindungsgemäße Vorrichtung 140 sowie das erfindungsgemäße System 110 im Fahrzeug 100. In das Steuergerät 140 gehen Signale von Beschleunigungssensoren 120 und einer Pre-Crash-Sensorik 130 ein. Und zwar über die Schnittstellen IF1 und IF2. Die Schnittstellen sind mit dem Mikrocontroller µC als der Steuereinheit verbunden, so dass dann der Mikrocontroller µC die Steuersignale für die Aktuatorik, nämlich die Seitenwangen und die Seitenairbags und Frontairbags erzeugen kann.

Frontairbags sind 150, Seitenairbags 160, Seitenwangen 195, die Kopfstütze 190 für den Fahrzeuginsassen 180. Mit 170 sind Airbags bezeichnet. Das erfindungsgemäße Verfahren läuft auf dem Mikrocontroller µC ab. D. h. in der ersten Phase, nämlich der frühen Pre-Crash-Phase wird durch die Seitenwangen 195 eine Stabilisierung des Fahrzeuginsassen 180 erreicht.

In der zweiten Phase, nämlich der späten Pre-Crash-Phase bei einem schon beginnenden oder unvermeidbaren Crash erfolgt die Beaufschlagung des Fahrzeuginsassen 180 mit einem Impuls in Richtung des Aufpralls. In der eigentlichen In-Crash-Phase macht dann der Fahrzeuginsasse einen sogenannten Rebound und bewegt sich in die andere Richtung, nämlich auf die Aufprallstelle hinzu. Durch die Vorbeschleunigung liegt jedoch eine reduzierte Aufprallenergie vor, die quadratisch von der Aufprallgeschwindigkeit, die nunmehr reduziert ist, abhängt. Die erste Aktuatorik bleibt weiterhin in ihrer Position, die sie in der ersten Phase eingenommen hat und hält so den Fahrzeuginsassen zurück.

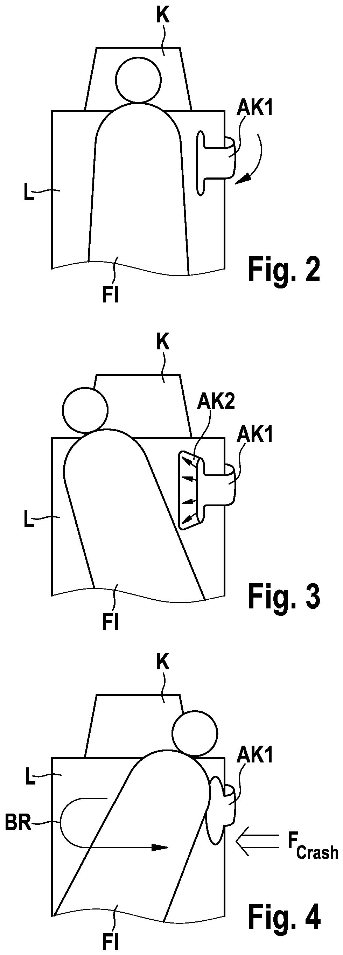

Die Figuren 2 bis 4 beschreiben einzelne Phase vor einem Seitenaufprall des Fahrzeuginsassen. Es ist eine schematische Darstellung gewählt. Figur 2 beschreibt die frühe Pre-Crash-Phase. Der Fahrzeuginsasse FI, der auf einem Fahrzeugsitz mit der Lehne L und der Kopfstütze K sitzt, wird von der ersten Aktuatorik AK1, die erfindungsgemäß elektromotorisch betrieben wird, stabilisiert.

Figur 3 zeigt, dass in der späten Pre-Crash-Phase die zweite Aktuatorik AK2 über einen Airbag den Fahrzeuginsassen FI mit einem Stoß beaufschlagt hat. Infolge dessen bewegt sich der Fahrzeuginsasse FI von der möglichen Aufprallstelle weg.

Figur 4 zeigt nun den In-Crash-Fall, bei der keine weitere Aktion der erfindungsgemäßen Vorrichtung erfolgt. Der Fahrzeuginsasse FI prallt gegen die Prallplatte . Durch die Pfeilrichtung ist die Crashrichtung angegeben.

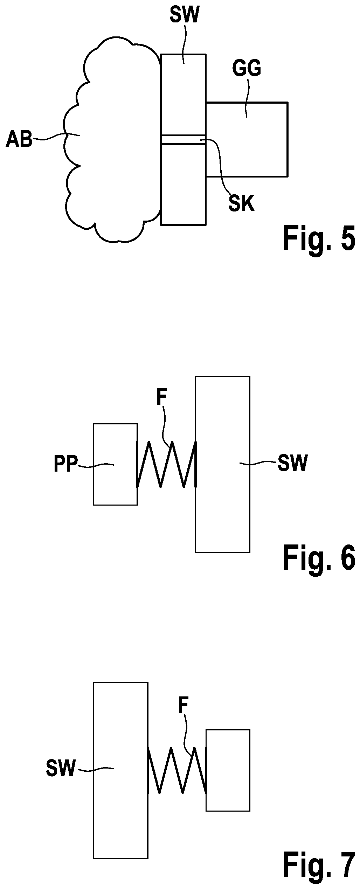

Figur 5 zeigt erfindungsgemäß der ersten und zweiten Aktuatorik. Ein Airbag AB wird über einen Schusskanal SK durch eine Seitenwange SW von einem Gasgenerator GG im Ansteuerungsfall aufgebläht.

In Figur 6 wird eine Feder zwischen einer Prallplatte PP und den Seitenwangen SW gespannt. Gemäß Figur 7 wird die Seitenwange auch als erste Aktuatorik durch die Feder F dazu verwendet, dem Fahrzeuginsassen einen Kraftstoß zu geben.

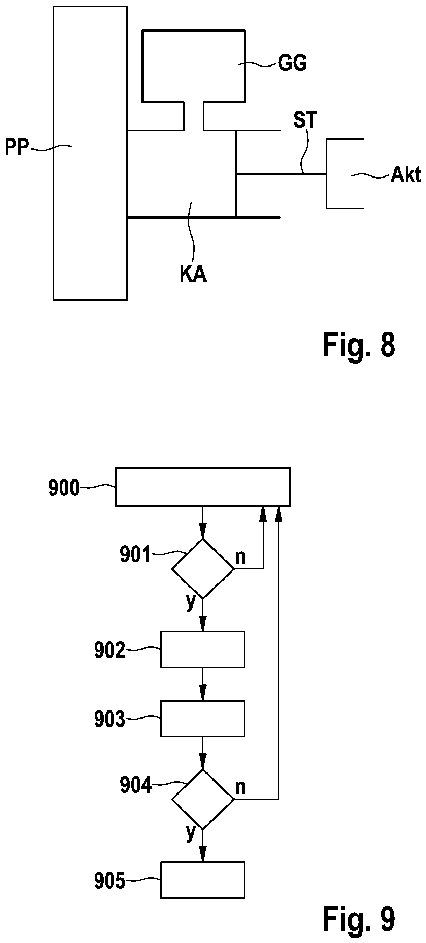

Figur 8 zeigt eine weitere Ausführungsform der erfindungsgemäßen Vorrichtung. In die Prallplatte schließt sich eine Kammer KA mit einem Stempel ST an, der von einer Aktuatorik AKT angesteuert wird. Die Kammer KA ist über einen Kanal mit einem Gasgenerator GG verbunden.

Figur 9 zeigt ein Flussdiagramm des erfindungsgemäßen Verfahrens. Im Verfahrensschritt 900 wird ein Pre-Crash-Signal vom Mikrocontroller µC ausgewertet und im Verfahrensschritt 901 einem Vergleichswert unterzogen, ob eine Gefahr eines bevorstehenden Aufpralls vorliegt oder nicht. Ist das nicht der Fall, wird zu Verfahrensschritt 900 gesprungen. Ist das jedoch der Fall, erfolgt im Verfahrensschritt 902 eine Stabilisierung in der ersten Phase und im Verfahrensschritt 903 die Erzeugung eines Steuersignals in das Steuergerät, wobei in Verfahrensschritt 904 festgestellt wird, ob auch die zweite Stufe tatsächlich gezündet hat. Dies ist im Verfahrensschritt 904 hinterlegt. Im Verfahrensschritt 205 erfolgt die Applikation des Pulses auf den Fahrzeuginsassen.

## Patentansprüche

1. Verfahren zum Schutz eines Fahrzeuginsassen (180) bei einem Aufprall, in dem vor dem Aufprall der Fahrzeuginsasse (180) in eine Aufprallrichtung bewegt wird, wobei in einer ersten Phase der Fahrzeuginsasse (180) in Abhängigkeit von einem Pre-Crash-Signal durch eine erste Aktuatorik (AK1) stabilisiert wird und wobei in einer zweiten Phase, die auf die erste Phase folgt, der Fahrzeuginsasse (180) in Abhängigkeit von einem einen beginnenden oder einen unvermeidbaren Aufprall kennzeichnenden Signal durch eine zweite Aktuatorik (AK2) in die Aufprallrichtung bewegt wird, **dadurch gekennzeichnet, dass die Stabilisierung des Fahrzeuginsassen (180) im Wesentlichen durch einen seitlichen Halt mittels elektromotorisch betriebenen Seitenwangen (195) erfolgt, und durch die zweite Aktuatorik (AK2) ein Kraftstoß ausgeführt wird, bewirkt durch eine sich entspannende Feder (F), oder durch einen Airbag (AB), der über einen Schusskanal (SK) durch die Seitenwange (195) von einem Gasgenerator (GG) im Ansteuerungsfall aufgebläht wird.**

2. Verfahren nach Anspruch 1, **dadurch gekennzeichnet, dass** die erste Aktuatorik (AK1) reversibel betrieben wird.

3. Verfahren nach Anspruch 1 oder 2, **dadurch gekennzeichnet, dass** die zweite Aktuatorik (AK2) irreversibel betrieben wird.

4. Verfahren nach einem der vorhergehenden Ansprüche, dass die Stabilisierung während der ersten und der zweiten Phase und darüber hinaus anhält.

5. Verfahren nach einem der vorhergehenden Ansprüche, **dadurch gekennzeichnet, dass** die zweite Aktuatorik (AK2) schneller ais die erste Aktuatorik (AK1) betrieben wird.

6. **System mit einer Vorrichtung zum Schutz eines Fahrzeuginsassen (180) mit:**
- einer ersten Schnittstelle (IF1), die ein Pre-Crash-Signal bereithält,
- einer zweiten Schnittstelle (IF2), die ein einen unvermeidlichen oder beginnenden Aufprall kennzeichnendes Signal bereitstellt,
- einer Steuereinheit (µC), die in Abhängigkeit vom Pre-Crash-Signal in einer ersten Phase eine erste Aktuatorik (AK1) zur Stabilisierung des Fahrzeuginsassen (180) in Abhängigkeit vom Signal in einer zweiten Phase, die auf die erste Phase folgt, eine zweite Aktuatorik (AK2) zur Bewegung des Fahrzeuginsassen in eine Aufprallrichtung ansteuert,
- **und der ersten Aktuatorik (AK1) und der zweiten Aktuatorik (AK2),**
**wobei die erste Aktuatorik (AK1) eine elektromotorisch betriebene Seitenwange (195) und die zweite Aktuatorik (AK2) ein Airbag (AB) sind, wobei ein Schusskanal (SK) in der Seitenwange (195) vorgesehen ist, oder die zweite Aktuatorik (AK2) zumindest eine Feder (F) ist.**

## Claims

1. Method for protecting a vehicle occupant (180) in
the event of an impact, in which, before the impact, the vehicle occupant (180) is moved in an impact direction,
in a first phase, the vehicle occupant (180) being stabilized by a first actuator (AK1) as a function of a pre-crash signal, and
in a second phase, which follows the first phase, the vehicle occupant (180) being moved in the impact direction by a second actuator (AK2) as a function of a signal identifying a beginning or an unavoidable impact,
**characterized in that**
the stabilization of the vehicle occupant (180) is carried out substantially by a lateral support by means of electric motor-operated side cheeks (195), and the second actuator (AK2) implements a force impulse, effected by an expanding spring (F) or by an airbag (AB), which is inflated by a gas generator (GG) via a shot channel (SK) through the side cheek (195) when activated.

2. Method according to Claim 1, **characterized in that** the first actuator (AK1) is operated reversibly.

3. Method according to Claim 1 or 2, **characterized in that** the second actuator (AK2) is operated irreversibly.

4. Method according to one of the preceding claims, that stabilization continues during the first and the second phase and beyond.

5. Method according to one of the preceding claims, **characterized in that** the second actuator (AK2) is operated more quickly than the first actuator (AK1).

6. System having a device for protecting a vehicle occupant (180), comprising
- a first interface (IF1), which holds a pre-crash signal,
- a second interface (IF2), which provides a signal identifying an unavoidable or beginning impact,
- a control unit (µC) which, as a function of the pre-crash signal, in a first phase activates a first actuator (AK1) for stabilizing the vehicle occupant (180) as a function of the signal, in a second phase, which follows the first phase, activates a second actuator (AK2) for moving the vehicle occupant in an impact direction,
- and the first actuator (AK1) and the second actuator (AK2),
wherein the first actuator (AK1) is an electric motor-operated side cheek (195) and the second actuator (AK2) is an airbag (AB), wherein a shot channel (SK) is provided in the side cheek (195), or the second actuator (AK2) is at least one spring (F).

## Revendications

1. Procédé de protection d'un passager (180) d'un véhicule en cas de collision, dans lequel
avant la collision, le passager (180) du véhicule est déplacé dans une direction de collision,
dans une première phase, le passager (180) du véhicule est stabilisé par un premier ensemble d'actionneurs (AK1) en fonction d'un signal de pré-collision et dans une deuxième phase qui suit la première phase, le passager (180) du véhicule est déplacé par un deuxième ensemble d'actionneurs (AK2) dans la direction de collision en fonction d'un signal qui caractérise un début de collision ou une collision inévitable,
**caractérisé en ce que**
la stabilisation du passager (180) s'effectue essentiellement par un maintien latéral au moyen de joues latérales (195) entraînées par moteur électrique et
**en ce qu'**une poussée est appliquée par le deuxième ensemble d'actionneurs (AK2) par un ressort (F) qui se détend ou par un coussin gonflable de sécurité (AB) qui, en cas d'activation, est gonflé par un générateur de gaz (GG) par l'intermédiaire d'un canal de tir (SK) qui traverse les joues latérales (195).

2. Procédé selon la revendication 1, **caractérisé en ce que** le premier ensemble d'actionneurs (AK1) est activé de manière réversible.

3. Procédé selon les revendications 1 ou 2,
**caractérisé en ce que** le deuxième ensemble d'actionneurs (AK2) est entraîné de manière irréversible.

4. Procédé selon l'une des revendications précédentes, que la stabilisation se maintient pendant la première et la deuxième phase et au-delà de cette dernière.

5. Procédé selon l'une des revendications précédentes, **caractérisé en ce que** le deuxième ensemble d'actionneurs (AK2) est actionné plus rapidement que le premier ensemble d'actionneurs (AK1).

6. Système présentant un ensemble de protection d'un passager (180) d'un véhicule, le système présentant:
- une première interface (IF1) qui porte un signal de pré-collision,
- une deuxième interface (IF2) qui délivre un signal qui caractérise une collision inévitable ou commençant,
- une unité de commande (µC) qui en fonction du signal de pré-collision active dans une première phase un premier ensemble d'actionneurs (AK1) pour stabiliser le passager (180) du véhicule et dans une deuxième phase qui suit la première phase, active un deuxième ensemble d'actionneurs (AK2) pour déplacer le passager du véhicule dans une direction de collision,
- le premier ensemble d'actionneurs (AK1) et le deuxième ensemble d'actionneurs (AK2),
le premier ensemble d'actionneurs (AK1) étant une joue latérale (195) entraînée par moteur électrique et le deuxième ensemble d'actionneurs (AK2) un coussin gonflable de sécurité (AB), un canal de tir (SK) étant prévu dans la joue latérale (195) ou le deuxième ensemble d'actionneurs (AK2) étant au moins un ressort (F).
